# EUROPÄISCHE PATENTSCHRIFT

(11) **EP 0 741 522 B1**
(45) Veröffentlichungstag und Bekanntmachung des Hinweises auf die Patenterteilung: **03.03.1999**
(21) Anmeldenummer: 95903813.4
(22) Anmeldetag: 18.12.1994
(51) Int. Cl.: A23J 1/20, A23J 3/08, A23J 3/34, A23C 11/04, A23C 9/20, A23L 1/305

(54) **MOLKENPROTEIN-DOMINANTE SÄUGLINGSMILCHNAHRUNG**
WHEY PROTEIN DOMINANT BABY MILK FOOD
ALIMENT LACTE POUR NOURISSONS AVEC UNE PREDOMINANCE DE PROTEINES DE LACTOSERUM

(30) Priorität: 23.12.1993 DE 4344342
(43) Veröffentlichungstag der Anmeldung: 13.11.1996
(73) Patentinhaber: MILUPA GmbH & Co. KG, 61381 Friedrichsdorf (DE)
(72) Erfinder: GEORGI, Gilda, D-61381 Friedrichsdorf (DE); SAWATZKI, Günther, D-35516 Münzenberg (DE); SCHWEIKHARDT, Friedrich, D-61381 Friedrichsdorf (DE)
(74) Vertreter: Köster, Hajo, Dr.
(86) Internationale Anmeldenummer: EP9404209
(87) Internationale Veröffentlichungsnummer: WO9517102

(56) Entgegenhaltungen:
- EP-A- 0 022 696
- EP-A- 0 226 221
- EP-A- 0 421 309

## Beschreibung

Die Erfindung betrifft Molkenprotein-dominante Säuglingsmilchnahrungen einschließlich Hydrolysatnahrungen.

Für die Herstellung von Säuglingsmilchnahrungen; einschließlich Hydrolysatnahrungen, werden unter anderem Kuhmilch bzw. Inhaltsstoffe aus der Kuhmilch eingesetzt. Dazu zählen beispielsweise die Kuhmilchproteine (Caseine und Molkenproteine). Die Kuhmilchproteine unterscheiden sich allerdings erheblich von denen der Humanmilch. Eine der wesentlichen Unterschiede besteht im Verhältnis der Caseine zu den Molkenproteinen. Während Kuhmilch ein Molkenprotein/Casein-Verhältnis von etwa 20:80 aufweist, liegt es bei der Humanmilch bei ca. 60:40 (50:50).

Um nun Säuglingsmilchnahrungen, die auch als Formelnahrungen bezeichnet werden können, herstellen zu können. müssen dementsprechend noch bovine Molkenproteine der Kuhmilch zugesetzt wergen. Derartige Nahrungen, die als Molkenprotein-dominante Nahrungen bezeichnet werden, haben allerdings den Nachteil, daß sie aufgrund ihres im Vergleich zu Humanmilch höheren Threoningehaltes zu einem deutlich erhöhten Threoninspiegel im Plasma von Säuglingen führen. Diesbezüglich sei beispielsweise verwiesen auf Journal of Pediatric Gastroenterology and Nutrition 1992, **14**, 450-455.

Diese deutlich erhöhten Threoninwerte werden bei allen üblichen Molkenprotein-dominanten Formelnahrungen festgestellt. Da jedoch Formelnahrungen hinsichtlich ihrer Inhaltsstoffe möglichst an die Zusammensetzung von Humanmilch angepaßt sein sollten, besteht ein Bedürfnis danach, den Threoningehalt in Formelnahrungen zu senken.

Es wurde nun überraschend gefunden, daß die analytisch bestimmten Threoningehalte in Molkenpulvern und Molkenproteinkonzentraten, die bei der Herstellung von Formelnahrungen als Molkenproteine zugesetzt werden, wesentlich höher sind als die theoretisch möglichen Threoninwerte, die rechnerisch aufgrund von Aminosäurensequenzdaten der einzelnen Molkenproteine ermittelt wurden. Dies führte zu der überraschenden Erkenntnis, daß die erhöhten Threoninwerte bei üblichen Formelnahrungen auf den zugesetzten Molkenproteinen beruhen müssen.

Aufgabe der vorliegenden Erfindung ist es, somit eine Molkenprotein-dominante Säuglingsmilchnahrung bzw. Formelnahrung mit einem reduzierten Threoningehalt bereitzustellen.

Gelöst wird diese Aufgabe durch die Lehre des Anspruchs 1.

Molkenpulver bzw. Molkenproteinkonzentrate, die für die Herstellung von Säuglingsmilchnahrungen verwendet werden, werden ausschließlich aus Süßmolke gewonnen. Süßmolke entsteht bei der Fällung von Caseinen aus Milch durch das Enzym Lab (Chymosin).

Bei dieser Fällung wird das kappa(æ)-Casein der Kuhmilch in das para-æ-Casein und das Glycomakropeptid (GMP) gespalten. Dabei präzipitiert das para-æ-Casein zusammen mit den anderen Caseinen (α-,β-,γ-Caseine) der Kuhlmilch. Das GMP verbleibt jedoch in Lösung und somit bei den Molkenproteinen. Das bedeutet, daß Molkenpulver bzw. Molkenproteinkonzentrat, die aus Süßmolke (Labmolke) gewonnen werden, neben den eigentlichen Molkenproteinen auch noch das GMP enthalten, das eigentlich zu den Caseinen gerechnet werden müßte. Das GMP zeichnet sich nun überraschenderweise durch einen sehr hohen Anteil an Threonin aus. Berechnungen haben ergeben daß Molkenproteine, die das GMP des æ-Caseins enthalten, ca. 50% mehr Threonin enthalten als Molkenproteine, die diesem GMP nicht aufweisen.

Der Kern der vorliegenden Erfindung besteht somit darin, bei der per se bekannten Herstellung von Formelnahrungen Molkenprotein bzw. Molkenpulver zuzusetzen, die kein GMP enthalten oder deren GMP-Gehalt teilweise oder vollständig entfernt wurde.

Will man aus Süßmolke gewonnene Molkenpulver und Molkenproteinkonzentrate zur Anwendung bringen, dann muß man das bei der Caseinfällung in Lösung bleibende und somit bei den Molkenproteinen verbleibende GMP durch geeignete Verfahren teilweise oder vollständig entfernen. Dies kann man beispielsweise mit Hilfe der Ultrafiltration vornehmen. Dazu wird nach Einstellen des pH-Wertes der Süßmolke auf unter 4,0 eine Ultrafiltration durchgeführt. Ein so gewonnenes Permeat enthält das GMP, während das Retentat die aufkonzentrierten Molkenproteine aufweist. Auf diese Weise läßt sich GMP großtechnisch aus Süßmolke (Labmolke) beispielsweise entfernen; es wird diesbezüglich verwiesen auf die US-PS 5 075 424.

Es ist ferner auch möglich, aus Sauermolke gewonnene Molkenproteine erfindungsgemäß zum Einsatz zu bringen. Bei der Sauermolke werden die Caseine mit Hilfe von Säuren (mineralische Säuren wie Salzsäure oder Schwefelsäure, oder organische Säuren, wie Milchsäure, die mit Hilfe von Milchsäurebakterien gebildet wird) gefällt. Bei diesem Prozeß werden alle Caseine der Kuhmilch, einschließlich des kompletten-æ-Caseins, ausgefällt. Die Sauermolke enthält somit nur die Molkenproteine. nicht aber das GMP aus dem æ-Casein.

Aus Sauermolke gewonnenes Molkenpulver oder Molkenproteinkonzentrat wurden jedoch bisher nicht zur Herstellung von Molkenprotein-dominanten Säuglingsmilchnahrungen bzw. adaptierten Formelnahrugen einschließlich Hydrolysatnahrungen eingesetzt, da die Verarbeitung dein Sauermolke wesentlich größere technologischen Schwierigkeiten mit sich bringt als die von Süßmolke. Es gab bisher noch keine Veranlassung, aus Sauermolke gewonnene Molkenproteine bzw. Molkenproteinkonzentrate zur Anwendung zu bringen da noch nicht bekannt war, daß das GMP für die erhöhten Threoningehalte bei bisher bekannten Säuglingsnahrungen verantwortlich ist.

Gegenstand der Erfindung ist auch ein Verfahren zur Herstellung von Molkenprotein-dominanter Säuglingsmilchnahrung gemäß dem Patentanspruch 5 sowie die Verwendung von aus Sauermolke oder GMP-freier oder GMP-reduzierter Süßmolke gewonnenem Molkenpulver und/oder Molhenproteinkonzentrat zur Herstellung von derartiger Säuglingsmilchnahrung.

Mit Hilfe des erfindungsgemäß zum Einsatz gebrachten Molkenproteins ist es möglich, den Molkenproteinanteil in Säuglingsmilchnahrungen entsprechend der Humanmilch zu erhöhen und gleichzeitig den Threoninanteil bis zu 25 % zu reduzieren.

Für die Herstellung von Hydrolysat-Nahrungen werden die Molkenproteine (aus Sauermolke oder aus Süßmolke nach Entfernen des GMP) nach bekannten Verfahren mit Enzymen (beispielsweise Trypsin und Chymotrypsin) noch hydrolysiert.

Nach einer bevorzugten Ausführungsform beträgt der Threoningehalt der erfindungsgemäßen Säuglingsmilchnahrung 4,0 bis 5,0 g/100 g Protein, vorzugsweise 4,3 bis 4,8 g/100 g Protein (bezogen auf die Proteine in der Säuglingsmilchnahrung). Der GMP-Gehalt beträgt vorzugsweise weniger als 2 Gew.-%, bezogen auf die Gesamtmenge der in der Säuglingsmilchnahrung vorhandenen Proteine. Im Gegensatz dazu enthalten bisher bekannte Molkenprotein-dominante Säuglingsmilchnahrungen Threoninmengen von 5,2 bis 6,0 g/100 g Protein sowie einen GMP-Gehalt von mehr als 8 %. Die festgestellten analytisch bedingten Schwankungen bei den Threoninbestimmungen können dabei bis zu 5 % ausmachen.

Unter dem im Rahmen der vorliegenden Unterlagen verwendeten Ausdruck "Protein" bzw. "Proteine" werden aus Aminosäuren aufgebaute Inhaltsstoffe verstanden. Die werte für den Gehalt bzw. für die Menge an Protein bzw. Proteinen wurden mit Hilfe der Aminosäureanalyse und nicht auf Basis der Stickstoffbestimmung nach Kjeldahl ermittelt. Bei der Berechnung der Proteinmenge wird nämlich häufig der Gehalt an Stickstoff mit Hilfe des Kjeldahl-Verfahrens bestimmt, der so erhaltene N-Wert wird dann mit einem bestimmten Faktor multipliziert. Dabei wird jedoch auch Stickstoff mit erfaßt, der nicht aus Inhaltsstoffen stammt, die aus Aminosäuren aufgebaut sind.

Die Erfindung wird anhand der folgenden, bevorzugte Ausführungsformen beschreibenden Beispiele näher erläutert.

### Beispiel 1: Adaptierte Säuglingsmilchnahrung als Sprühprodukt (Chargengröße 100 kg)

172,2 kg Sahne (mit 10,2 % Milchfett und 11,72 kg Magermilchtrockensubstanz) werden in einem heizbaren Tank mit Rührwerk gegeben und auf 70 °C erwärmt. Unter intensiven Rühren werden nacheinander 30,4 kg entmineralisiertes Molkenpulver (13,5 % Protein) aus Sauermolke oder aus Süßmolke, nach Entfernung des GMP, 26,9 kg Lactose, 0,025 kg Taurin, 0,3 kg Kaliumchlorid (vorgelöst in 10 l Wasser von 60 °C), 0,4 kg Calciumcarbonat und 0,5 kg Mineralstoffmischung zugegeben und vollständig aufgelöst. 0,5 kg Emulgator werden in 11,2 kg heißer Pflanzenfettmischung (50-60 °C) aufgelöst und dem Ansatz zugegeben. Danach wird eine Vitaminmischung (0,5 kg) eingerührt. Der fertige Ansatz wird auf 70-75 °C erwärmt und bei 180 bar homogenisiert. Danach wird das Konzentrat über einen Erhitzer auf 95 °C erwärmt, auf 70 °C gekühlt und sprühgetrocknet.

### Beispiel 2: Säuglingsmilchnahrung auf Hydrolysatbasis (Chargengröße 100 kg)

In 100 l heißem Wasser (ca. 70-75 °C) werden unter intensivem Rühren nacheinander aufgelöst:

36,8 kg Lactose, 14,8 kg Maltodextrin, 3,0 kg Stärke, 7.8 kg Molkenproteinhydrolysat (aus Sauermolke oder aus Süßmolke, nach Entfernen des GMP), 6,5 kg Caseinhydrolysat, 0,09 kg reduziertes Glutation. 0.6 kg Kaliumchlorid (in ca. 5 l warmen Wasser von 60 °C vorgelöst), 0,27 kg tri-Kaliumcitrat (in ca. 5 l Wasser von 60 °C vorgelöst), 0,19 kg Citronensäure (in ca. 3 l heißem Wasser von 60 °C vorgelöst) und 1:4 kg Mineralstoffmischung. 2 kg Emulgatoren werden in heißem (50-60 °C) aufgeschmolzenem Fett (26,3 kg) vollständig aufgelöst und die Mischund dem Ansatz zugegeben. Danach wird die Vitaminmischung (0:31 kg) zugesetzt und vollständig aufgelöst. Der Ansatz wird auf 70-75 °C erwärmt und mit 180-200 bar homogenisiert. Danach wird das Konzentrat in einem Erhitzer auf 95 °C erwärmt und anschließend sprühgetrocknet.

## Patentansprüche

1. Molkenprotein-dominante Säuglingsmilchnahrung einschließlich Hydrolysatnahrung,
dadurch erhältlich, daß als Molkenproteine bzw. Molkenproteinhydrolysate, die in Form von Molkenpulver und/oder Molkenproteinkonzentrat üblicherweise zur Herstellung von Säuglingsmilchnahrungen zugesetzt werden, solche eingesetzt werden, die aus
a) Sauermolke und/oder
b) GMP freier oder GMP reduzierter Süßmolke gewonnen werden
und die ansonsten hinsichtlich ihrer Proteinzusammensetzung keiner Veränderung unterworfen werden.

2. Säuglingsmilchnahrung nach Anspruch 1,
dadurch **gekennzeichnet,**
daß der Threoningehalt 4,0 bis 5,0 g/100 g Protein beträgt.

3. Säuglingsmilchnahrung nach Anspruch 2,
dadurch **gekennzeichnet,**
daß der Threoningehalt 4,3 bis 4,8 g/100 g Protein beträgt.

4. Säuglingsmilchnahrung nach einem der vorhergehenden Ansprüche,
dadurch **gekennzeichnet,**
daß der Gehalt an Glykomakropeptid (GMP) weniger als 2 Gew.-% beträgt.

5. Verfahren zur Herstellung molkenprotein-dominanter Säuglingsmilchnahrung einschließlich Hydrolysatnahrung, bei dem Molkenproteine bzw. Molkenproteinhydrolysate in Form von Molkenpulver und/oder Molkenproteinkonzentrat üblicherweise Säuglingsmilchnahrungen zugesetzt werden,
dadurch **gekennzeichnet,**
daß solche eingesetzt werden, die aus
a) Sauermolke und/oder
b) GMP freier oder GMP reduzierter Süßmolke gewonnen werden
und die ansonsten hinsichtlich ihrer Proteinzusammensetzung keiner Veränderung unterworfen werden.

6. Verwendung von Molkenproteinen und Molkenproteinkonzentrat, die in Form von Molkenpulver und/oder Molkenproteinkonzentrat üblicherweise zugesetzt werden,
wobei solche eingesetzt werden, die aus
a) Sauermolke und/oder
b) GMP freier oder GMP reduzierter Süßmolke gewonnen werden
und die ansonsten hinsichtlich ihrer Proteinzusammensetzung keiner Veränderung unterworfen werden,
zur Herstellung von Säuglingsmilchnahrungen.

## Claims

1. A whey protein dominant baby milk food including hydrolysed food obtainable thereby that those whey proteins or whey powders, which are normally employed in the form of whey powders and/or whey protein concentrates for the production of baby milk foods, are used which originate from
a) sour whey and/or
b) GMP-free or GMP-reduced sweet whey
and which have not been subjected any other change with respect to their protein composition.

2. Baby milk food according to claim 1,
**characterized** in that
the threonine content is 4.0 to 5.0 g/100 g of protein.

3. Baby milk food according to claim 1,
**characterized** in that
the threonine content is 4.3 to 4.8/100 g of protein.

4. Baby milk food according to one of the preceeding claims,
**characterized** in that
the glycomacropeptide (GMP) content is less than 2 % by weight.

5. Process for producing whey protein dominant baby milk foods including hydrolysed food when whey proteins or whey protein hydrolysates, respectively, in form of whey powders and/or whey protein concentrate are normally added to baby milk foods,
**characterized** in that
those are used which have been obtained from
a) sour whey and/or
b) GMP-free or GMP-reduced sweet whey
and which have not been objected any further treatment with respect to the protein composition.

6. The use of whey proteins and whey protein concentrate which are normally used in the form of whey powders and/or whey protein concentrate,
whereby those are used which have been obtained from
a) sour whey and/or
b) GMP-free or GMP-reduced sweet whey
and which have not been subjected to any further change of their protein composition,
for the production of baby milk foods.

## Revendications

1. Aliment lacté pour nourrissons, y compris aliment à base d'hydrolysat, à prédominance de protéines de lactosérum, pouvant être obtenu par utilisation, en tant que protéines de lactosérum ou d'hydrolysats de protéines de lactosérum qui sont habituellement ajoutés, sous forme de poudre de lactosérum et/ou de concentré de protéines de lactosérum, dans la fabrication d'aliments lactés pour nourrissons, ceux qui sont obtenus à partir
a) de lactosérum acide et/ou
b) de lactosérum doux exempt de GMP ou à teneur réduite en GMP
et qui par ailleurs ne sont soumis à aucune modification en ce qui concerne leur composition en protéines.

2. Aliment lacté pour nourrissons selon la revendication 1, caractérisé en ce que la teneur en thréonine va de 4,0 à 5,0 g/100 g de protéine.

3. Aliment lacté pour nourrissons selon la revendication 2, caractérisé en ce que la teneur en thréonine va de 4,3 à 4,8 g/100 g de protéine.

4. Aliment lacté pour nourrissons selon l'une des revendications précédentes, caractérisé en ce que la teneur en glycomacropeptide (GMP) est inférieure à 2 % en poids.

5. Procédé pour la fabrication d'aliments lactés pour nourrissons, y compris d'aliments à base d'hydrolysat, à prédominance de protéines de lactosérum, dans lequel on ajoute à des aliments lactés pour nourrissons, à la manière usuelle, des protéines de lactosérum ou des hydrolysats de protéines de lactosérum sous forme de poudre de lactosérum et/ou de concentré de protéines de lactosérum, caractérisé en ce que l'on utilise ceux qui sont obtenus à partir
a) de lactosérum acide et/ou
b) de lactosérum doux exempt de GMP ou à teneur réduite en GMP
et qui par ailleurs ne sont soumis à aucune modification en ce qui concerne leur composition en protéines.

6. Utilisation de protéines de lactosérum et de concentré de protéines de lactosérum, qui sont habituellement ajoutés sous forme de poudre de lactosérum et/ou de concentré de protéines de lactosérum, dans laquelle on utilise ceux qui sont obtenus à partir
a) de lactosérum acide et/ou
b) de lactosérum doux exempt de GMP ou à teneur réduite en GMP
et qui par ailleurs ne sont soumis à aucune modification en ce qui concerne leur composition en protéines,
pour la fabrication d'aliments lactés pour nourrissons.
